# EUROPÄISCHE PATENTSCHRIFT

(11) **EP 2 430 315 B1**
(45) Veröffentlichungstag und Bekanntmachung des Hinweises auf die Patenterteilung: **11.07.2018**
(21) Anmeldenummer: 10725959.0
(22) Anmeldetag: 12.05.2010
(51) Int. Cl.: F04D 29/58, F01D 11/04

(54) **STRÖMUNGSVORRICHTUNG MIT KAVITÄTENKÜHLUNG**
FLOW DEVICE COMPRISING A CAVITY COOLING SYSTEM
DISPOSITIF D'ÉCOULEMENT À REFROIDISSEMENT DE CAVITÉS

(30) Priorität: 14.05.2009 DE 102009021384
(43) Veröffentlichungstag der Anmeldung: 21.03.2012
(73) Patentinhaber: MTU Aero Engines AG, 80995 München (DE)
(72) Erfinder: RUED, Klaus Peter, 82194 Gröbenzell (DE); KOCH, David, 80538 München (DE); HUMHAUSER, Werner, 85368 Moosburg (DE)
(86) Internationale Anmeldenummer: PCT/DE2010/000532
(87) Internationale Veröffentlichungsnummer: WO 2010/130251

(56) Entgegenhaltungen:
- EP-A1- 1 413 711
- EP-B1- 0 735 255
- EP-B1- 1 213 444
- EP-B1- 1 219 788
- DE-A1-102006 043 610
- GB-A- 2 270 118
- US-A- 4 820 116
- US-B1- 6 267 553
- US-B1- 6 398 488

## Beschreibung

Die Erfindung betrifft einer Strömungsvorrichtung mit Kavitätenkühlung für Gasturbinen. Eine derartige als Verdichter ausgebildete Strömungsvorrichtung ist zum Beispiel in der deutschen Patentanmeldung DE 10 2005 045 255 A1 der Anmelderin gezeigt. Dieser Verdichter für Gasturbinen ist in Axialbauweise ausgeführt und hat ein mehrteiliges Gehäuse, in dem ein Rotor mit einer Vielzahl von Laufschaufeln drehbar gelagert ist. Zwischen den Laufschaufeln erstrecken sich gehäuseseitig befestigte Leitschaufeln. An den Leitschaufeln sind plattenartige Dichtelemente angeordnet, die mit gegenüberliegenden radialbundartigen Dichtkörpern des Rotors zusammenwirken. Die Dichtelemente und die Dichtkörpern bilden eine Vielzahl von axial benachbarten Kavitäten, sogenannte Inner-Air-Seal-Kavitäten. Luft, die im Betrieb des Verdichters aus einer Hauptströmung in die Kavitäten strömt, heizt sich in hinteren Verdichterstufen stärker auf als die Luft in der Hauptströmung bzw. dem Hauptstrom. Dies liegt darin begründet, dass die Temperaturverteilung in dem Hauptstrom nicht konstant ist, sondern zu seinen wandungsnahen Randschichten hin zunimmt. Die Luft strömt aus den heißeren Randschichten in die Kavitäten, zirkuliert dort und überströmt die Dichtkörper entgegen der Richtung des Hauptstroms. Die Luft wärmt sich weiter auf und vermischt sich wieder mit der Luft aus der Hauptströmung. Dies bewirkt jedoch eine zusätzliche Erwärmung der Randschichten, so dass der Effekt der heißeren Randschichten verstärkt wird. Durch diesen Effekt sind die Dichtelemente, die Dichtkörper und rotorseitige Aufnahmen zur Befestigung der Laufschaufeln besonders hohen Temperaturen ausgesetzt und in ihrer Lebensdauer und Festigkeit temperaturbegrenzt.

Aus der GB 2 270 118 A ist ein Axialverdichter einer Turbomaschine mit einem Kühlluftsystem bekannt, wobei die Kühlluft aus der Primär- und Sekundärzuströmung des Axialverdichters gespeist wird. Die Primärzuströmung wird aus der stromab letzten Rotorstufe des Verdichters gespeist. Die Kühlluft wird über einen Wärmetauscher und einer unmittelbar vor dem Diffusor zur Brennkammer angeordneten Leitschaufelanordnung einer Sammelkammer zur weiteren Verteilung zugeführt.

Aus der EP 0 735 244 A1 ist eine Gasturbine mit einem Kühlluftsystem bekannt, in dem die Kühlluft axial entgegen der Hauptströmungsrichtung der stromab letzten Verdichterstufe zugeführt wird.

Aus der US 6,267,553 B1 ist eine Gasturbine mit einem Verdichter bekannt, in dem ein Kühlluftstrom durch die Rotorwelle axial, in Hauptströmungsrichtung, in innen hohle Laufschaufeln geleitet wird.

Aus der US 6,398,488 B1 ist eine Axialturbine mit einem Kühlluftsystem bekannt, in dem Kühlluft durch eine hohle Leitschaufelanordnung zum Kühlen einer Zwischenstufendichtung und angrenzender Komponenten geführt wird.

Aus der EP 1 413 711 A1 ist ein Verfahren und eine Einrichtung zur Kühlung von Rotorschaufeln eines Gasturbinentriebwerks bekannt. Ein Radialkanal, der durch eine Leitschaufel geführt wird, erstreckt sich in eine Kavität zwischen zwei Laufrädern.

Aus der US 4,820,116 A ist eine Gasturbine bekannt, in der ein Kühlluftstrom aus einer die Brennkammer umgebenden Kühlkammer zum Kühlen von stromab der Brennkammer angeordneten Turbinenbauteilen genutzt wird.

Aufgabe der vorliegenden Erfindung ist es, eine Strömungsvorrichtung zu schaffen, welche die vorgenannten Nachteile beseitigt und eine gezielte Herabsetzung der Temperatur in den Kavitäten ermöglicht.

Diese Aufgabe wird gelöst durch eine Strömungsvorrichtung mit den Merkmalen des Anspruch 1.

Erfindungsgemäß ist in zumindest eine der Kavitäten, der insbesondere als Verdichter oder Turbine ausgebildeten, Strömungsvorrichtung Kühlluft einbringbar. Die Kühlluft bewirkt eine Herabsetzung der Temperatur in der zumindest einen Kavität und somit eine Temperatursenkung in angrenzenden Bauteilen. Bei unveränderter Geometrie der Bauteile steigt deren Lebensdauer. Die Bauteile können bzgl. ihrer Geometrie optimiert werden, wodurch sie leichter ausführbar sind.
In zumindest einer Leitschaufel der erfindungsgemäßen Strömungsvorrichtung ist zum Einbringen der Kühlluftströmung mindestens ein Radialkanal ausgebildet, der sich radial zwischen einem Gehäusekanal und einer ringartigen, zwischen als Dicht-Fins ausgeführten, rotorseitigen Dichtkörpern ausgebildeten Kavität erstreckt und in diese mündet. Die radialbundartigen Dicht-Fins verjüngen sich in Richtung der Dichtelemente.

Bei einem bevorzugten Ausführungsbeispiel der Erfindung wird die Kühlluft radial in die Kavität eingeblasen. Der Gehäusekanal kann in eine Außenumgebung und/oder in eine vordere Verdichterstufe münden. Um die Kühlluft aus der Außenumgebung und/oder bspw. den vorderen Verdichterstufen in die Kavität zu fördern, kann in dem Gehäusekanal eine Pumpe vorgesehen sein. Der Radialkanal in der Leitschaufel hat den Vorteil, dass diese von Innen gekühlt wird.

Ebenso kann die Kühlluft aus einem Brennkammervorraum abgezapft werden. Hierzu ist in einem Diffusor ein Diffusorkanal ausgebildet, der sich zwischen dem Brennkammervorraum und dem Radialkanal erstreckt. Zum Abkühlen der Luft aus dem Brennkammervorraum ist in dem Diffusorkanal ein Wärmetauscher vorgesehen. Der Diffusorkanal hat den Vorteil, dass der Diffusor von Innen gekühlt wird. Zusätzlich ist es möglich, dass die Kühlluft axial entgegen einer Hauptströmung in die Kavität geblasen wird. Dabei mündet der Diffusorkanal in zumindest einen Axialkanal, der in einer
Laufschaufelaufnahme ausgebildet und zu einer der Kavitäten geöffnet ist. Um die Kühlluft in mehrere Kavitäten fördern zu können, ist in einer der Laufschaufelaufnahmen zumindest ein Verbindungskanal ausgebildet, der sich zwischen den zu kühlenden Kavitäten erstreckt. Diese axiale Kühlluftzuführung bewirkt neben der Kühlung des Diffusors eine Kühlung der Laufschaufelaufnahme.

Um die Luft in dem Diffusorkanal mit Außenumgebungsluft vermischen zu können, kann in der Strömungsvorrichtung ein Durchgangskanal vorgesehen sein, der in den Diffusorkanal mündet. Hierdurch kann der Wärmetauscher leistungsreduzierter ausgeführt sein.

Weiterhin kann in dem Diffusorkanal eine Vordralleinrichtung zur Drallbeaufschlagung der Luft aus dem Brennkammervorraum vorgesehen sein.

Bei einem Ausführungsbeispiel ist ein Überdruckkühlluftspeicher zum Entnehmen der Luft vorgesehen.

Sonstige vorteilhafte Ausführungsbeispiele sind Gegenstand weiterer Unteransprüche.

Im Folgenden werden bevorzugte Ausführungsbeispiele der Erfindung anhand schematischer Darstellungen näher erläutert. Es zeigen
Figur 1 einen Längsschnitt durch einen Verdichter mit Varianten einer erfindungsgemäßen Kühllufteinblasung,
Figur 2 eine Detailansicht mit radialer Kühllufteinblasung, und
Figur 3 eine Detailansicht mit axialer Kühllufteinblasung.

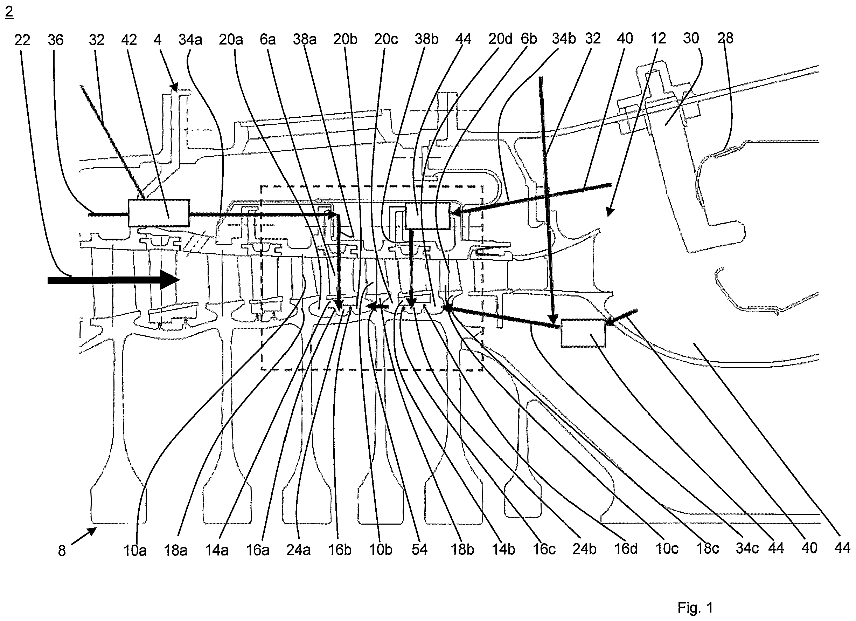

Figur 1 zeigt einen Längsschnitt durch einen Hochdruckbereich einer als Verdichter 2 ausgeführten Strömungsvorrichtung mit einer erfindungsgemäßen Kühllufteinblasung. Dabei sind in Figur 1 mehrere Arten der Kühllufteinblasung gezeigt. Der Verdichter 2 ist in Axialbauweise ausgeführt und Teil einer Gasturbine, insbesondere eines Flugzeugtriebwerks. Er hat ein mehrteiliges Gehäuse 4, das eine Vielzahl von Leitschaufeln 6a, 6b trägt, und in dem ein Rotor 8 mit einer Vielzahl von Laufschaufeln 10a, 10b,... drehbar gelagert ist. Die Leitschaufeln 6a, 6b und die Laufschaufeln 10a, 10b,... sind in Axialrichtung des Verdichters 2 abwechselnd nebeneinander angeordnet und verkleinern sich von einem nicht gezeigten Eintritt in Richtung eines turbinenseitigen Diffusors 12.

Die Leitschaufeln 6a, 6b tragen an ihren Spitzen jeweils ein Deckband, das an seiner dem Rotor 8 zugewandten Fläche mit einem wabenartigen und plattenartigen Dichtelement 14a, 14b versehen ist.

Gegenüber den Dichtelementen 14a, 14b sind rotorseitig radialbund- bzw. stegartige Dichtkörper 16a, 16b,..., sogenannte Dicht-Fins, angeordnet, die sich in Richtung der Dichtelemente 14a, 14b verjüngen. Sie sind in axialer Richtung paarweise in Reihen nebeneinander angeordnet und mit ihren Spitzen von den Dichtelementen 14a, 14b über jeweils einen nicht bezeichneten Radialspalt beabstandet. Die Dicht-Fins 16a, 16b,... bilden jeweils mit einer benachbarten rotorseitigen Laufschaufelaufnahme 18a, 18b,... einen Ringraum 20a, 20b,..., der radial zum Hauptstrom 22 geöffnet ist. Zwischen den Dicht-Fins 16a, 16b,... sind ringartige Zwischenräume 24a, 24b, gebildet, die über den jeweiligen Radialspalt mit den benachbarten Ringräumen 20a, 20b,... in Wirkverbindung stehen. Die Ringräume 20a, 20b,... und die Zwischenräume 24a, 24b stellen Kavitäten 20, 24 im Sinne der Erfindung dar. Der Hauptstrom 22 wird von Luft gebildet, die durch den Eintritt in den Verdichter 2 strömt und diesen verdichtet über den Diffusor 12 in einen Brennkammervorraum 26 der Turbinenseite verlässt. Dem Brennkammervorraum 26 ist eine Vielzahl von Brennern 28 mit Fackeln 30 nachgeschaltet. Ein nicht dargestellter Teilstrom wird als Kühlung der Turbinenseite verwendet.

Erfindungsgemäß wird in die Kavitäten 20, 24 Kühlluft eingeblasen. Ein Ausführungsbeispiel sieht vor, Umgebungsluft 32 aus einer Außenumgebung als einen Kühlluftstrom 34a in die Kavitäten 20, 24 zu führen.

Ein weiteres Ausführungsbeispiel sieht vor, Zapfluft 36 aus einer Verdichtervorstufe als Kühlluftstrom 34a in die Kavitäten 20, 24 zu führen.

Ein anderes Ausführungsbeispiel sieht vor, die Umgebungsluft 32 und die Zapfluft 36 kombiniert als Kühlluftstrom 34a in die Kavitäten 20, 24 zu führen.

Zum Führen des Kühlluftstroms 34a sind in dem Gehäuse 4 entsprechende, nicht gezeigte Gehäusekanäle ausgebildet. Diese erstrecken sich von der vorderen Verdichterstufe oder von der Außenumgebung in Richtung eines nicht gezeigten Radialkanals der Leitschaufel 6a. Der Kühlluftstrom 34a durch den Radialkanal ist durch den Pfeil 38a angedeutet. Der Radialkanal erstreckt sich radial durch die Leitschaufel 6a einschließlich dem Deckband und dem Dichtelement 14a und mündet in den Zwischenraum 24a. Um den Kühlluftstrom 34a in den Zwischenraum 24a blasen zu können, ist in dem Gehäusekanal eine elektrisch betriebene Pumpe 42 zur Druckanhebung des Kühlluftstroms 34a vorgesehen.

Ein Ausführungsbeispiel sieht vor, Brennkammervorraumluft 40 als einen Kühlluftstrom 34b in die Kavitäten 20, 24 zu führen. Der Kühlluftstrom 34b wird durch einen nicht gezeigten Diffusorkanal aus dem Brennkammervorraum 26 geführt. Zur Abkühlung des Kühlluftstroms 34b ist in dem Diffusorkanal eine Zwischenkühlung in Form eines Wärmetauschers 44 vorgesehen. Nach dem Abkühlen wird der Kühlluftstrom 34b durch einen nicht gezeigten Radialkanal der Leitschaufel 6b in den Zwischenraum 24b geführt. Die Kühlluftstromführung 34b durch den Radialkanal ist durch den Pfeil 38b angedeutet. Ergänzend kann vorgesehen sein, die Brennkammervorraumluft 40 rotorseitig als einen Kühlluftstrom 34c durch nicht gezeigte Axialkanäle und Verbindungskanäle in den Laufschaufelaufnahmen 18b, 18c in die Kavitäten 20, 24, zu führen. Der Kühlluftstrom 34c durch die Laufschaufelaufnahmen 18b, 18c in Axialerrichtung ist durch den Pfeil 54 angedeutet.

Ein anderes Ausführungsbeispiel sieht vor, die Brennkammervorraumluft 40 nach dem Passieren des Wärmetauschers 44 mit Umgebungsluft 32 zu dem Kühlmittelstrom 34c zu vermischen.

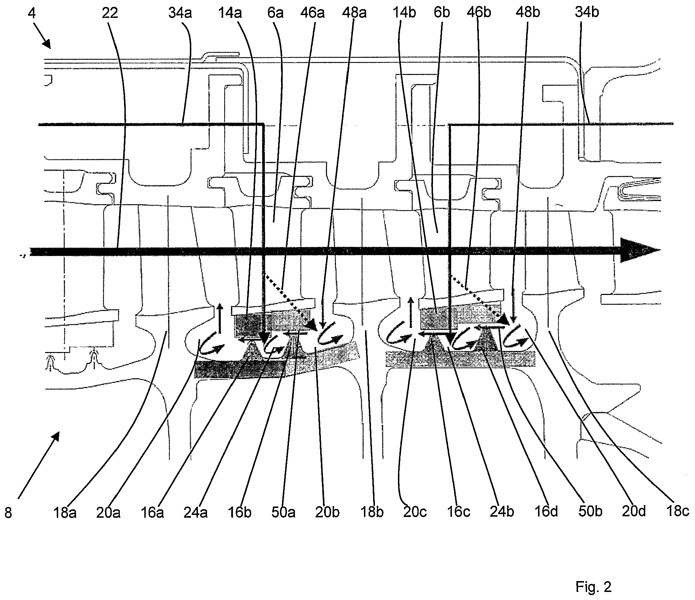

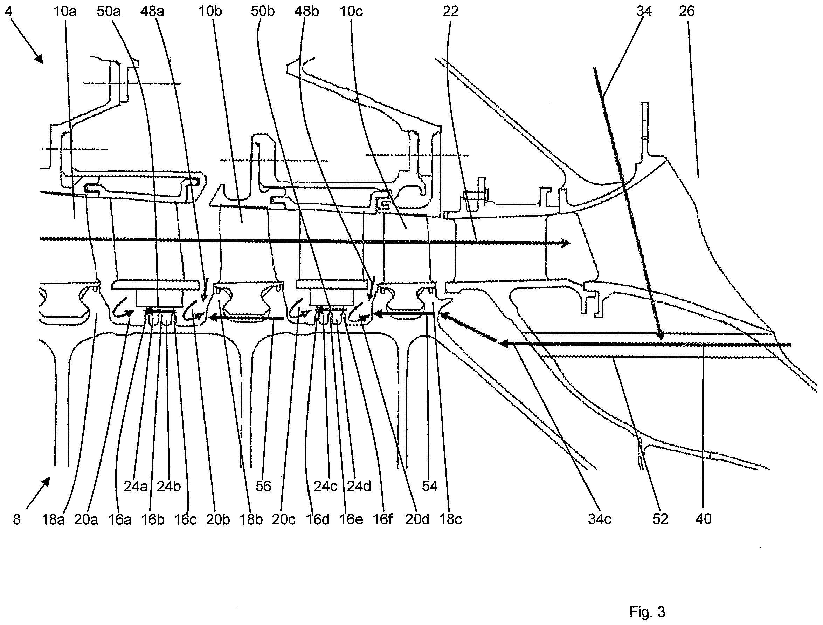

Eine detaillierte Erläuterung der erfindungsgemäßen Kühllufteinblasung erfolgt in den Figuren 2 und 3.

Figur 2 zeigt im Wesentlichen eine Detaildarstellung des in der Figur 1 gestrichelt umrandeten Bereichs. Der Kühlluftstrom 34a wird radial durch die Leitschaufel 6a in den Zwischenraum 24a eingeleitet. Parallel wird der Kühlluftstrom 34b radial durch die Leitschaufel 6b in den Zwischenraum 24b eingeleitet. Zusätzlich wird ein Teilstrom 46a, 46b der Kühlluftströme 34a, 34b in den Leitschaufeln 6a, 6b in den jeweiligen hinteren Ringraum 20b, 20d abgezweigt.

Im Betrieb strömt Luft 48a, 48b aus heißeren Randschichten des Hauptstroms 22 in die Ringräume 20b, 20d. Dort vermischt sich die Luft 48a, 48b mit den Teilströmen 46a, 46b und überströmt die hinteren Dicht-Fins 16b, 16d als abgekühlter Gegenstrom 50a, 50b entgegen der Richtung des Hauptstroms 22. Die Gegenströme 50a, 50b treten in den jeweiligen Zwischenraum 24a, 24b ein und werden dort mit dem jeweiligen Kühlluftstrom 34a, 34b verwirbelt und erneut abgekühlt. Die Gegenströme 50a, 50b überströmen die vorderen Dicht-Fins 16a, 16c in Richtung der Ringräume 20a, 20c, werden in diesen wieder verwirbelt und vermischen sich abschließend mit Randschichten des Hauptstroms 22, so dass diese abgekühlt werden.

Aufgrund der erfindungsgemäßen Kühllufteinblasung im Bereich der Kavitäten 20, 24 werden insbesondere die Dichtelemente 14a, 14b und die Dicht-Fins 16a, 16b,.... gekühlt und somit deren Festigkeit vergrößert. Bei gleichem Design der Bauteile wird die Lebensdauer erhöht bzw. bei gleicher Lebensdauer kann das Design optimiert werden. Ebenso wird durch die innere Kühlung der Leitschaufeln 6a, 6b deren Standfestigkeit erhöht. Des Weiteren hat die Kühlung einen positiven Effekt auf die Laufschaufelaufnahmen 18a, 18b,....

Figur 3 zeigt das in Figur 1 erwähnte Ausführungsbeispiel, bei dem zusätzlich ein Kühlluftstrom 34c aus einem Brennkammervorraum 26 abgezapft und durch rotorseitige Laufschaufelaufnahmen 18b, 18c axial gegen die Richtung eines Hauptstroms 22 in Ringräume 20b, 20d geführt wird. Diese Variante hat den Vorteil, dass die Laufschaufelaufnahmen 18a, 18b,... und insbesondere die Laufschaufeln 10a, 10b,... fußseitig gekühlt werden. Dabei sind jeweils zwei Gruppen von drei Dicht-Fins 16a, 16b,... gezeigt, zwischen denen jeweils ein Zwischenraum 24a, 24b,... ausgebildet ist. In der Laufschaufelaufnahme 18c ist zumindest ein nicht gezeigter Axialkanal ausgebildet, der mit einem Diffusorkanal 52 in Wirkverbindung steht und zum Zwischenraum 20d hin geöffnet ist. Die Bewegungsrichtung des Kühlluftstroms 34c durch den Axialkanal ist durch den Pfeil 54 angedeutet. In der Laufschaufelaufnahme 18b ist ein nicht gezeigter Verbindungskanal vorgesehen, der sich zwischen den Ringräumen 20b, 20c erstreckt, so dass der Kühlluftstrom 34c aus dem Ringraum 20c in den Ringraum 20b geführt werden kann. Die Bewegungsrichtung des Kühlluftstroms 34c durch den Verbindungskanal ist durch den Pfeil 56 angedeutet. Zusätzlich mündet in den Diffusorkanal 52 ein nicht gezeigter Durchgangskanal zum Vermischen der Brennkammervorraumluft 40 mit Umgebungsluft 32. Der in Figur 1 gezeigte Wärmetauscher 44 ist aus Gründen der Übersichtlichkeit hier nicht dargstellt.

Der Kühlluftstrom 34c tritt durch die Axialkanäle in der Laufschaufelaufnahme 18c der letzten Laufschaufel 10b in den Ringraum 20d ein, in dem er mit Luft 48b aus heißeren Randschichten des Hauptstroms 22 verwirbelt wird. Die abgekühlte Luft 48b überströmt als gekühlter Gegenstrom 50b die Dicht-Fins 16d, 16e, 16f und wird in dem Ringraum 20c erneut verwirbelt. Der verwirbelte Gegenstrom 50b tritt durch den Verbindungskanal in den Ringraum 20b ein und wird dort mit Luft 48a aus den heißeren Randschichten des Hauptstroms 22 verwirbelt. Er überströmt als Gegenstrom 50a die Dicht-Fins 16a, 16b, 16c, wird in dem Ringraum 20a verwirbelt und verlässt den Ringraum 20a in Richtung des Hauptstroms 22, wo er sich mit den Randschichten vermischt. Die axiale Weiterführung des Kühlluftstroms 34c durch die Laufschaufelaufnahmen 18a, 18b,... ist solange wiederholbar, bis sich der Gegenstrom 50a, 50b soweit aufgeheizt hat, dass keine weitere Kühlung der abgezweigten Luft 48a, 48b aus dem Hauptstrom 22 erfolgt.

Auch wenn bei der vorstehenden Beschreibung zur Figur 3 eine Verwirbelung der Gegenströme 50a, 50b in den Zwischenräumen 24a, 24b,... nicht ausdrücklich genannt ist, so findet sie dennoch wie vorbeschrieben bei Figur 2 statt.

Bei einem nicht gezeigten Ausführungsbeispiel ist in dem Diffusorkanal 52 eine Vordralleinrichtung in Form von Vordralldüsen zur Drallbeaufschlagung des Kühlluftstroms 34c vorgesehen.

Die zu den Figuren 1 und 2 erwähnte Pumpe 42 kann ebenfalls mechanisch über einen Geräteträger angetrieben werden.

Bei einem weiteren nicht gezeigten Ausführungsbeispiel wird die Luft für den Kühlluftstrom 34a, 34b,... aus einem Überdruckkühlluftspeicher entnommen und radial über Radialkanäle in den Leitschaufeln 6a, 6b und ggfs. zusätzlich axial über Axialkanäle und Verbindungskanäle in den Laufschaufelaufnahmen 18a, 18b,... in die Kavitäten 20, 24 geblasen.

## Patentansprüche

1. Strömungsvorrichtung, insbesondere Verdichter in Axialbauweise für eine Gasturbine, mit einem Gehäuse (4), das eine Vielzahl von Leitschaufeln (6a, 6b) trägt, und in dem ein Rotor (8) mit einer Vielzahl von Laufschaufeln (10a, 10b,...) drehbar gelagert ist, wobei die Leitschaufeln (6a, 6b) Dichtelemente (14a, 14b) aufweisen, die mit gegenüberliegenden rotorseitigen Dicht-Fins (16a, 16b,...) Kavitäten (20, 24) begrenzen, wobei ein Kühlluftstrom (34a, 34b) in zumindest eine der Kavitäten (20, 24) einbringbar ist, wobei in zumindest einer Leitschaufel (6a, 6b) mindestens ein Radialkanal zur Einbringung des Kühlluftstroms (34a, 34b) ausgebildet ist, der sich radial zwischen einem Gehäusekanal und einer ringartigen, zwischen den Dicht-Fins (16a, 16b,...) ausgebildeten Kavität (24a, 24b) erstreckt und in diese mündet, wobei sich die rotorseitig radialbundartigen Dicht-Fins (16a, 16b,...) in Richtung der Dichtelemente (14a, 14b) verjüngen.

2. Strömungsvorrichtung nach Anspruch 1, wobei der Kühlluftstrom (34a, 34b) radial einblasbar ist.

3. Strömungsvorrichtung nach Anspruch 1 oder 2, wobei der Gehäusekanal in eine Außenumgebung zum Zuführen von Umgebungsluft (32) mündet.

4. Strömungsvorrichtung nach einem der vorhergehenden Ansprüche, wobei der Gehäusekanal in eine vordere Verdichterstufe zum Zuführen von Zapfluft (36) mündet.

5. Strömungsvorrichtung nach einem der vorhergehenden Ansprüche, wobei eine Pumpe (42) zum Fördern des Kühlluftstroms (34a) in die Kavität (24a) vorgesehen ist.

6. Strömungsvorrichtung nach einem der Ansprüche 1 bis 4, wobei der Gehäusekanal mit einem Diffusorkanal (52) zum Zuführen von Brennkammervorraumluft (40) aus einem Brennkammervorraum (26) in Wirkverbindung steht.

7. Strömungsvorrichtung nach einem der vorhergehenden Ansprüche, wobei zusätzlich Kühlluft (34c) axial entgegen einer Richtung eines Hauptstroms (22) zuführbar ist.

8. Strömungsvorrichtung nach Anspruch 7, wobei zumindest eine rotorseitige Laufschaufelaufnahme (18c) von einem Axialkanal durchsetzt ist, der mindestens zu einer der Kavitäten (20d) hin geöffnet ist.

9. Strömungsvorrichtung nach Anspruch 8, wobei der Axialkanal mit dem Diffusorkanal (52) zum Zuführen von Brennkammervorraumluft (40) in Wirkverbindung steht.

10. Strömungsvorrichtung nach 8 oder 9, wobei die Kavitäten (20b, 20c) über zumindest einen Verbindungskanal in einer benachbarten Laufschaufelaufnahme (18b) miteinander in Wirkverbindung stehen.

11. Strömungsvorrichtung nach einem der Ansprüche 6 bis 10, wobei zumindest ein Durchgangskanal zum Zuführen von Umgebungsluft (34) in den Diffusorkanal (52) mündet.

12. Strömungsvorrichtung nach einem der Ansprüche 6 bis 11, wobei in dem Diffusorkanal (52) ein Wärmetauscher (44) zum Zwischenkühlen der Brennkammervorraumluft (40) angeordnet ist.

13. Strömungsvorrichtung nach einem der Ansprüche 6 bis 12, wobei in dem Diffusorkanal (52) eine Vordralleinrichtung zur Drallbeaufschlagung der Brennkammervorraumluft (40) vorgesehen ist.

14. Strömungsvorrichtung nach einem der vorhergehenden Ansprüche, wobei ein Überdruckkühlluftspeicher zum Zuführen des Kühlluftstroms (34a, 34b, 34c) vorgesehen ist.

## Claims

1. Flow device, in particular an axial compressor for a gas turbine, comprising a housing (4) that supports a plurality of guide vanes (6a, 6b) and in which a rotor (8) comprising a plurality of rotor blades (10a, 10b, ...) is rotatably mounted, wherein the guide vanes (6a, 6b) comprise sealing elements (14a, 14b) that, together with sealing fins (16a, 16b, ...) arranged opposite thereto on the rotor side, define cavities (20, 24), wherein a cooling air flow (34a, 34b) can be introduced into at least one of the cavities (20, 24), wherein at least one radial channel for introducing the cooling air flow (34a, 34b) is formed in at least one guide vane (6a, 6b), which radial channel extends radially between a housing channel and an annular cavity (24a, 24b) that is formed between the sealing fins (16a, 16b, ...), and which channel leads into said cavity, wherein the radial collar-like sealing fins (16a, 16b, ...) on the rotor side taper towards the sealing elements (14a, 14b).

2. Flow device according to claim 1, wherein the cooling air flow (34a, 34b) can be blown in radially.

3. Flow device according to either claim 1 or claim 2, wherein the housing channel leads into external surroundings in order to supply ambient air (32).

4. Flow device according to any of the preceding claims, wherein the housing channel leads into a front compressor stage in order to supply bleed air (36).

5. Flow device according to any of the preceding claims, wherein a pump (42) is provided for delivering the cooling air stream (34a) into the cavity (24a).

6. Flow device according to any of claims 1 to 4, wherein the housing channel is operatively connected to a diffuser channel (52) in order to supply combustion chamber vestibule air (40) from a combustion chamber vestibule (26).

7. Flow device according to any of the preceding claims, wherein cooling air (34c) can also be supplied axially, counter to a direction of a main flow (22).

8. Flow device according to claim 7, wherein at least one rotor blade receptacle (18c) on the rotor side is penetrated by an axial channel that is open at least towards one of the cavities (20d).

9. Flow device according to claim 8, wherein the axial channel is operatively connected to the diffusor channel (52) in order to supply combustion chamber vestibule air (40).

10. Flow device according to either claim 8 or claim 9, wherein the cavities (20b, 20c) are operatively interconnected by means of at least one connecting channel in an adjacent rotor blade receptacle (18b).

11. Flow device according to any of claims 6 to 10, wherein at least one through-channel leads into the diffusor channel (52) in order to supply ambient air (34).

12. Flow device according to any of claims 6 to 11, wherein a heat exchanger (44) is arranged in the diffusor channel (52) for the purpose of intermediate cooling of the combustion chamber vestibule air (40).

13. Flow device according to any of claims 6 to 12, wherein a prerotation device for subjecting the combustion chamber vestibule air (40) to a swirling motion is provided in the diffusor channel (52).

14. Flow device according to any of the preceding claims, wherein an overpressure cooling air cell is provided for supplying the cooling air flow (34a, 34b, 34c).

## Revendications

1. Dispositif d'écoulement, en particulier compresseur à construction axiale pour une turbine à gaz, comprenant un carter (4) qui supporte une pluralité d'aubes directrices (6a, 6b) et dans lequel un rotor (8) doté d'une pluralité d'aubes mobiles (10a, 10b, ...) est monté de manière rotative, dans lequel les aubes directrices (6a, 6b) comprennent des éléments d'étanchéité (14a, 14b) qui, conjointement avec des ailettes d'étanchéité (16a, 16b, ...) en regard côté rotor, délimitent des cavités (20, 24), dans lequel un flux d'air de refroidissement (34a, 34b) peut être introduit dans au moins l'une des cavités (20, 24), dans lequel au moins un canal radial servant à l'introduction du flux d'air de refroidissement (34a, 34b) est formé dans au moins une aube directrice (6a, 6b), lequel canal radial s'étend radialement entre un canal de carter et une cavité (24a, 24b) annulaire formée entre les ailettes d'étanchéité (16a, 16b, ...) et débouche dans celle-ci, et dans lequel les ailettes d'étanchéité (16a, 16b, ...) en forme de collerettes radiales côté rotor se rétrécissent en direction des éléments d'étanchéité (14a, 14b).

2. Dispositif d'écoulement selon la revendication 1, dans lequel le flux d'air de refroidissement (34a, 34b) peut être insufflé radialement.

3. Dispositif d'écoulement selon la revendication 1 ou 2, dans lequel le canal de carter débouche dans un environnement extérieur servant à acheminer de l'air ambiant (32).

4. Dispositif d'écoulement selon l'une quelconque des revendications précédentes, dans lequel le canal de carter débouche dans un étage avant de compresseur servant à acheminer de l'air de soutirage (36).

5. Dispositif d'écoulement selon l'une quelconque des revendications précédentes, dans lequel une pompe (42) servant à refouler le flux d'air de refroidissement (34a) dans la cavité (24a) est prévue.

6. Dispositif d'écoulement selon l'une quelconque des revendications 1 à 4, dans lequel le canal de carter est en liaison fonctionnelle avec un canal de diffuseur (52) servant à acheminer de l'air de chambre préliminaire de chambre de combustion (40) à partir d'une chambre préliminaire de chambre de combustion (26).

7. Dispositif d'écoulement selon l'une quelconque des revendications précédentes, dans lequel de l'air de refroidissement (34c) peut en outre être acheminé axialement en sens inverse à un sens d'un flux principal (22).

8. Dispositif d'écoulement selon la revendication 7, dans lequel au moins un logement d'aube mobile (18c) côté rotor est traversé par un canal axial qui est ouvert au moins vers l'une des cavités (20d).

9. Dispositif d'écoulement selon la revendication 8, dans lequel le canal axial est en liaison fonctionnelle avec le canal de diffuseur (52) servant à acheminer de l'air de chambre préliminaire de chambre de combustion (40).

10. Dispositif d'écoulement selon la revendication 8 ou 9, dans lequel les cavités (20b, 20c) sont en liaison fonctionnelle les unes avec les autres par le biais d'au moins un canal de liaison dans un logement d'aube mobile (18b) adjacent.

11. Dispositif d'écoulement selon l'une quelconque des revendications 6 à 10, dans lequel au moins un canal de passage servant à acheminer de l'air ambiant (34) débouche dans le canal de diffuseur (52).

12. Dispositif d'écoulement selon l'une quelconque des revendications 6 à 11, dans lequel un échangeur de chaleur (44) servant au refroidissement intermédiaire de l'air de chambre préliminaire de chambre de combustion (40) est disposé dans le canal de diffuseur (52).

13. Dispositif d'écoulement selon l'une quelconque des revendications 6 à 12, dans lequel un dispositif de tourbillonnement préliminaire servant à soumettre l'air de chambre préliminaire de chambre de combustion (40) à un tourbillonnement préliminaire est prévu dans le canal de diffuseur (52).

14. Dispositif d'écoulement selon l'une quelconque des revendications précédentes, dans lequel un réservoir d'air de refroidissement à surpression servant à acheminer le flux d'air de refroidissement (34a, 34b, 34c) est prévu.
